# EUROPÄISCHE PATENTANMELDUNG

(11) **EP 2 796 950 A1**
(43) Veröffentlichungstag der Anmeldung: **29.10.2014**
(21) Anmeldenummer: 13164877.6
(22) Anmeldetag: 23.04.2013
(51) Int. Cl.: G05B 17/02, G05B 19/4097

(54) **Verfahren zum Entwurf eines mechatronischen Systems, Computerprogramm zur Implementierung des Verfahrens und nach dem Verfahren arbeitender Arbeitsplatzrechner**

(71) Anmelder: Siemens Aktiengesellschaft, 80333 München (DE)
(72) Erfinder: Hamm, Carsten, 91058 Erlangen (DE); Menzel, Thomas, 91088 Bubenreuth (DE)

(57) **Zusammenfassung**

Es werden ein Verfahren zum computerunterstützten Entwurf eines mechatronischen Systems (22), ein entsprechendes Computerprogramm (20) und ein Arbeitsplatzrechner (10) mit einem solchen Computerprogramm (20) angegeben, wobei mit einem Computerprogramm/Engineeringsystem (20) ein mechanischer Entwurf des Systems (22) erstellt wird, wobei dem Engineeringsystem (20) auch Eigenschaften zumindest eines von dem mechatronischen System (22) umfassten Antriebs (24) verfügbar gemacht werden und wobei der mechanische Entwurf an die Eigenschaften des zumindest einen Antriebs (24) und/oder die Eigenschaften des zumindest einen Antriebs (24) an den mechanischen Entwurf angepasst werden.

## Beschreibung

Die Erfindung betrifft ein Verfahren zum Entwurf eines mechatronischen Systems, also zum Beispiel einer Werkzeug- oder Produktionsmaschine, oder zum Entwurf derartiger mechatronischer Systeme. Die Erfindung betrifft darüber hinaus auch ein im Weiteren als Engineeringsystem bezeichnetes Computerprogramm zur Implementierung des Verfahrens. Schließlich betrifft die Erfindung auch einen nach dem Verfahren arbeitenden Arbeitsplatzrechner.

Der Entwurf mechatronischer Systeme findet heute meist in aufeinanderfolgenden Schritten (Projektierungsschritten) statt. Danach erfolgt zunächst ein mit dem jeweiligen mechanischen Entwurf befasster Arbeitsschritt, dessen Ergebnis eine Konstruktion des mechatronischen Systems ist und der im Folgenden mitunter auch selbst kurz als Konstruktion bezeichnet wird. Anschließend wird eine Dimensionierung der Antriebe vorgenommen und auf Basis dieser Dimensionierung erfolgt eine Auswahl der Antriebe. Schließlich erfolgt eine Schaltplanerstellung und zum Abschluss erfolgt die Automatisierung des jeweiligen Systems, also die Auswahl einer Steuerungstechnik und eine Programmierung des oder jedes von dem mechatronischen System umfassten Automatisierungssystems.

Die Konstruktion und die Schaltplanerstellung erfolgen dabei üblicherweise unter Verwendung von Softwarewerkzeugen. Die Verwendung von Softwarewerkzeugen in Form sogenannter CAD-Programme für mechanische Konstruktionsaufgaben ist allgemein bekannt. Auch die Erstellung von Schaltplänen, Stromlaufplänen und dergleichen mittels spezifisch angepasster CAD-Programme, sogenannter eCAD- oder ECAD-Programme (mitunter auch mit dem Kürzel EDA für Electronic Design Automation bezeichnet), ist bekannt. Beispiele für CAD-Programme zur mechanischen Konstruktion sind die unter der Bezeichnung der "SolidEdge" und "NX" angebotenen Produkte der Siemens AG.

Eine Übernahme von Daten der Konstruktion in einen folgenden Prozessschritt erfolgt meist über dateibasierte Schnittstellen. Eine Dimensionierung der für das mechatronische System verwendeten Antriebe, zum Beispiel in Bezug auf Anschlussleistung, Netzfilter, Zwischenkreis, Leistungsteil, Motor und so weiter, erfolgt dagegen unabhängig von der Konstruktion und in einem separaten Schritt. Geometrieinformationen werden dabei mitunter aufwendig exportiert oder sogar teilweise oder komplett neu erstellt. Die so verfügbar gemachten Daten zur jeweils konstruierten Mechanik, nämlich Geometrie, Massen, Reibungsverhältnissen, Schwerkrafteinflüssen, Lastzyklen und so weiter, bilden die Basis für die Dimensionierung der Antriebstechnik. Die genannten Größen aus der Konstruktion bestimmen insbesondere die erforderlichen Leistungsgrößen der Antriebstechnik, nämlich zum Beispiel ein maximales Drehmoment, ein Nenndrehmoment oder die Leistung. Entsprechend basieren die Dimensionierung und die darauf fußende Auswahl der Antriebe auf Daten aus der Konstruktion, die bisher nicht oder zumindest nicht auf einfache und unkomplizierte Art und Weise für diesen Projektierungsschritt zur Verfügung stehen.

Eine Aufgabe der Erfindung besteht ausgehend von dieser Beobachtung darin, die bisherige Entkopplung des mit der Konstruktion befassten Projektierungsschritts und des mit der Auswahl und Dimensionierung der Antriebe befassten Projektierungsschritts aufzuheben oder zumindest die beiden Projektierungsschritte stärker miteinander zu verzahnen.

Diese Aufgabe wird erfindungsgemäß mit einem Verfahren mit den Merkmalen des Anspruchs 1 gelöst. Dazu ist bei einem Verfahren zum computerunterstützten Entwurf eines mechatronischen Systems Folgendes vorgesehen: Mit einem Engineeringsystem wird ein mechanischer Entwurf des mechatronischen Systems erstellt. Dem Engineeringsystem werden in geeigneter Form auch Eigenschaften zumindest eines von dem mechatronischen System umfassten Antriebs verfügbar gemacht. Die Verfügbarmachung kann in Form einer Erweiterung oder Ergänzung der verwendeten Datensätze erfolgen, die einen während des mechanischen Entwurfs projektierten Antrieb nicht nur hinsichtlich seiner Dimension, seines Gewichts oder sonstiger mechanischer Eigenschaften, sondern auch im Hinblick auf elektrische Eigenschaften und vor allem im Hinblick auf Leistungsdaten beschreiben. Zum Abschluss des Verfahrens erfolgt mittels des Engineeringsystems eine automatische oder eine zumindest durch das Engineeringsystem unterstützte Anpassung des mechanischen Entwurfs an die Eigenschaften des zumindest einen Antriebs und/oder eine solche Anpassung der Eigenschaften des zumindest einen Antriebs an den mechanischen Entwurf.

Die Erfindung geht von der Erkenntnis aus, dass bisher beim computerunterstützten Entwurf eines mechatronischen Systems eine bloße Ergebnisübernahme stattfindet. Dabei ist zum Beispiel auf der einen Seite eine Lastkurve eines von dem mechatronischen System umfassten Antriebs Basis für die Dimensionierung des Antriebs und auf der anderen Seite die Geometrie des Motors Basis für den mechanischen Entwurf. Diese Trennung verhindert eine Optimierung des Gesamtsystems in einer frühen Entwurfsphase, weil keine gleichzeitige Betrachtung der Mechanik und der Antriebstechnik erfolgt.

Eine Optimierung findet bisher beim mechanischen Entwurf nicht statt, weil dort keine Daten zur Antriebstechnik enthalten sind. Zum Beispiel kann ein Motor nur als Geometrieelement und als ideale Drehmomentquelle modelliert werden. Es sind keine antriebsspezifischen Charakteristika, wie zum Beispiel eine Motorkennlinie, verfügbar, die im Zusammenspiel mit der Mechanik eine Verifikation oder Optimierung der Produktivität des Gesamtsystems ermöglichen würden. Bei einer solchen Verifikation würden zum Beispiel dynamische Größen des Antriebs, wie Beschleunigung und Ruck, betrachtet.

Eine Optimierung findet bisher auch bei der Dimensionierung des Antriebs oder der Antriebe nicht statt, weil dort keine Daten zur Mechanik enthalten sind, etwa Daten zu kinematischen Beziehungen, Randbedingungen, Daten zu (bewegten) Massen und dergleichen. Als Randbedingungen werden dabei insbesondere konstruktive oder mechanische Eigenschaften des mechatronischen Systems verstanden. Zu solchen konstruktiven Randbedingungen/Eigenschaften gehören zum Beispiel eine mögliche Einbaugröße einer Einheit, insbesondere eines Motors, die durch die umliegenden Maschinenteile bestimmt ist, oder Möglichkeiten zur Entwärmung, die aufgrund baulicher Gegebenheiten eingeschränkt sein können (dies wirkt sich zum Beispiel auf einen Leistungsbereich aus, in dem ein Motor betrieben werden kann). Zu solchen mechanischen Randbedingungen/Eigenschaften gehören insbesondere statische Kräfte, die zum Beispiel bei hängenden Achsen zum Ausgleich der Gravitation aufgebracht werden müssen, oder maximal zulässige Geschwindigkeiten der mechanischen Bauteile zum Beispiel auf der Abtriebsseite von Getrieben, in Führungen oder Lagerungen.

Im Rahmen der Dimensionierung des oder jedes Antriebs kann aber bisher keine Optimierung der Mechanik erfolgen, weil die Mechanik als gegeben angenommen wird. Die elektrische Auslegung folgt streng nach den mechanischen Vorgaben und muss diese erfüllen. In einem ungünstigen Fall muss zum Beispiel der nächstgrößere Motor und die nächstgrößere Einspeisung projektiert werden, nur weil die Leistungsdaten gerade überschritten sind. Dabei hätte eventuell eine minimale Änderung der Mechanik oder der geforderten Bewegungsaufgabe eine bessere Alternativlösung ermöglicht.

Ein wesentlicher Vorteil der Erfindung besteht entsprechend darin, dass die mit dem hier vorgeschlagenen Verfahren erreichte Überwindung der bisherigen Trennung des mechanischen Entwurfs des jeweiligen mechatronischen Systems und der Dimensionierung des oder jedes von dem mechatronischen System umfassten Antriebs eine Optimierung von Parametern aus verschiedenen Domänen, nämlich Mechanik und Elektrik, erlaubt und so im Rahmen des Entwurfs des mechatronischen Systems ein mechatronisches Gesamtoptimum erreicht werden kann.

Ein im mechatronischen System verwendeter Antrieb oder mehrere Antriebe mit den davon umfassten elektrischen Komponenten, insbesondere Einspeisung, Umrichter, Motor, und den beim Betrieb des Antriebs betroffenen mechanischen Komponenten, also zum Beispiel eine angetriebene Welle oder bei einem Industrieroboter die komplette kinematische Kette im Anschluss an ein Gelenk, wird hier und im Folgenden als Antriebsstrang verstanden. Auf den Antriebsstrang bezieht sich die angestrebte Optimierung. Dafür ist zum Beispiel ein Rechenmodell vorgesehen, mit dem anhand der in den vorangehenden Projektierungsschritten festgelegten mechanischen und elektrischen Parameter des Antriebsstrangs ein Leistungsbedarf des Systems und eine Leistung des oder jedes Antriebs gegenübergestellt wird.

Zur Leistung des oder jedes Antriebs werden dem Engineeringsystem in geeigneter Form entsprechend Eigenschaften des jeweiligen Antriebs oder der jeweiligen Antriebe verfügbar gemacht. Also zum Beispiel Daten zur Leistung, zum Drehmoment, zur Überlastfähigkeit, zur Feldschwächung, zum Wirkungsgrad und/oder zur Energieeffizienz und so weiter. Diese Daten sind in einer für das Engineeringsystem vorgesehenen Bibliothek mit jeweils einem Antrieb verknüpft, so dass sie dem Engineeringsystem bei einer Auswahl eines Antriebs unmittelbar zur Verfügung stehen.

Auf dieser Basis wird die Möglichkeit geschaffen, den mechanischen Entwurf an die Eigenschaften des Antriebsstrangs und des davon umfassten zumindest einen Antriebs oder die Eigenschaften des zumindest einen Antriebs an den mechanischen Entwurf anzupassen. Ein Verwender des Engineeringsystems wird dabei von dem Engineeringsystem unterstützt, etwa indem ein jeweils resultierender Leistungsbedarf des mechatronischen Systems automatisch ermittelt wird und automatisch einer Leistung des oder jedes Antriebs gegenübergestellt wird. Diese Ermittlung des Leistungsbedarfs und die Gegenüberstellung von Leistungsbedarf und Antriebsleistung kann der Verwender des Engineeringsystems während des computerunterstützten Entwurfs des jeweiligen mechatronischen Systems zu beinahe beliebigen Zeitpunkten abrufen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass der mechanische Entwurf an die Eigenschaften des zumindest einen Antriebs und/oder die Eigenschaften des zumindest einen Antriebs an den mechanischen Entwurf angepasst werden, indem mit einem in dem Engineeringsystem implementierten Rechenmodell automatisch Vorschläge für eine Anpassung der Mechanik an den zumindest einen Antrieb und/oder für eine Anpassung des zumindest einen Antriebs an die Mechanik gemacht werden. Dann kann zum Beispiel aus einer Bibliothek mit Daten zu einer Mehrzahl von in einem mechatronischen System verwendbaren Antrieben ein im Vergleich zu einem bisher projektierten Antrieb automatisch hinsichtlich seiner Leistungsdaten nächstkleinerer oder nächstgrößerer Antrieb ausgewählt werden und ebenfalls automatisch geprüft werden, ob dieser Antrieb zu dem mechanischen Entwurf passt. Diese Schritte können automatisch wiederholt werden, bis ein zu dem mechanischen Entwurf passender Antrieb gefunden ist. Die Schritte können auch wiederholt werden, bis mehrere zu dem mechanischen Entwurf passende Antriebe gefunden sind, so dass eine Auswahlmöglichkeit für den Entwerfer des mechatronischen Systems entsteht. Die gleichen Verhältnisse gelten entsprechend auch für eine Anpassung der Mechanik an den oder jeden Antrieb. Hier kommt zum Beispiel in Betracht, dass aus einer Bauteilbibliothek Daten zu unterschiedlichen Antriebswellen geladen und automatisch im Hinblick auf eine Eignung zur Verwendung in dem mechatronischen System geprüft werden.

Bei einer weiteren Ausführungsform des Verfahrens ist vorgesehen, dass als Eigenschaft des zumindest einen Antriebs dem Engineeringsystem eine Kenngröße des Antriebs, insbesondere eine Kennlinie, nämlich zum Beispiel eine Leistungskennlinie, eine Drehmomentkennlinie usw., verfügbar gemacht wird und dass mit dem Rechenmodell automatisch geprüft wird, ob der mechanische Entwurf und der zumindest eine Antrieb zueinander passen.

Bei einer nochmals weiteren Ausführungsform des Verfahrens ist vorgesehen, dass die Prüfung, ob der mechanische Entwurf und der zumindest eine Antrieb zueinander passen, anhand einer für das mechatronische System mittels des Rechenmodells ermittelten Lastkurve erfolgt. Die Lastkurve berücksichtigt die Dynamik des mechatronischen Systems. Die Prüfung anhand der Lastkurve ermöglicht damit eine Aussage, ob der Antrieb auch den dynamischen Anforderungen des mechatronischen Systems gerecht wird.

Wenn die Lastkurve an einem Arbeitspunkt des jeweiligen Antriebs betrachtet wird, ist eine Anpassung des mechanischen Entwurfs einerseits und des oder jedes Antriebs andererseits an einen stationären Betrieb des mechatronischen Systems möglich.

Wenn die Lastkurve an mehreren Stützstellen, insbesondere an mehreren Stützstellen bis zu einer mit dem Arbeitspunkt zusammenfallenden letzten Stützstelle, betrachtet wird, ist eine Anpassung des mechanischen Entwurfs einerseits und des oder jedes Antriebs andererseits an einen dynamischen Betrieb des mechatronischen Systems möglich, insbesondere an Betriebssituationen, wie sie sich beim Anfahren eines Arbeitspunkts des jeweiligen Antriebs ergeben.

Die oben genannte Aufgabe wird auch mit einem Arbeitsplatzrechner gemäß dem unabhängigen Vorrichtungsanspruch gelöst, der nach dem Verfahren und gegebenenfalls nach einem Verfahren mit einzelnen oder mehreren im Folgenden beschriebenen Ausgestaltungen arbeitet und dafür Mittel zur Ausführung des Verfahrens aufweist. Der Begriff Arbeitsplatzrechner ist eine hier und im Folgenden verwendete Bezeichnung für eine Plattform, auf der das zum computerunterstützten Entwurf eines mechatronischen Systems bestimmte Engineeringsystem ablaufen kann. Als eine derartige Plattform kommt im Grunde jeder Computer in Betracht. Die Bezeichnung Arbeitsplatzrechner soll entsprechend Computer unterschiedlicher Leistungsklassen und auch eine verteilte Verarbeitung in einem Netzwerk umfassen. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Arbeitsplatzrechner, in dessen Speicher als Mittel zur Durchführung des Verfahrens und seiner Ausgestaltungen ein solches und als Entwicklungsumgebung zum Entwurf eines mechatronischen Systems fungierendes Computerprogramm geladen oder ladbar ist.

Vorteilhafte Ausgestaltungen sind Gegenstand der auf den Vorrichtungsanspruch rückbezogenen Unteransprüche oder ergeben sich aus einer Umsetzung einzelner oder mehrerer Merkmale des Anspruchs 1 und der darauf rückbezogenen Ansprüche.

Der Vorteil der Erfindung und ihrer Ausgestaltungen besteht damit insbesondere darin, dass die Zusammenfassung oder zumindest die gemeinsame Verfügbarmachung von konstruktionsspezifischen Daten und antriebsspezifischen Daten eine gesamtheitliche Optimierung des jeweiligen mechatronischen Systems ermöglicht. Die Optimierungsmöglichkeiten beziehen sich dann auf die elektrische Ausrüstung, die Maschinenkonstruktion und die Bewegungsaufgabe. Die Optimierung erfolgt in einer Designumgebung, die mit einem zur Implementierung des hier vorgeschlagenen Verfahrens vorgesehenen Computerprogramm, nämlich dem Engineeringsystem, realisiert ist. Die mechatronische Konstruktionslösung kann dort auch überprüft werden, da sich mechanische Eigenschaften und der Antriebsstrang in einer geeigneten Umgebung treffen, nämlich dem Engineeringsystem, das Zugriff auf alle relevanten Daten und zumindest ein Rechenmodell zur Anpassung der Mechanik an einen Antrieb und oder zur Anpassung des Antriebs an die Mechanik hat.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen:
- FIG 1: einen Arbeitsplatzrechner, auf dem das hier vorgeschlagene Verfahren in Form einer Implementierung als Computerprogramm ablaufen kann,
- FIG 2: einen Industrieroboter als Beispiel für ein mechatronisches System,
- FIG 3: einen bisherigen Ablauf beim Entwurf eines mechatronischen Systems,
- FIG 4: eine Lastkurve eines mechatronischen Systems als Maß für einen Leistungsbedarf des Systems,
- FIG 5: einen Ablauf beim Entwurf eines mechatronischen Systems gemäß dem hier vorgeschlagenen Ansatz, und
- FIG 6: eine Gegenüberstellung einer Lastkurve gemäß FIG 4 und einer Antriebskennlinie als Maß für eine von einem Antrieb erhältliche Leistung.

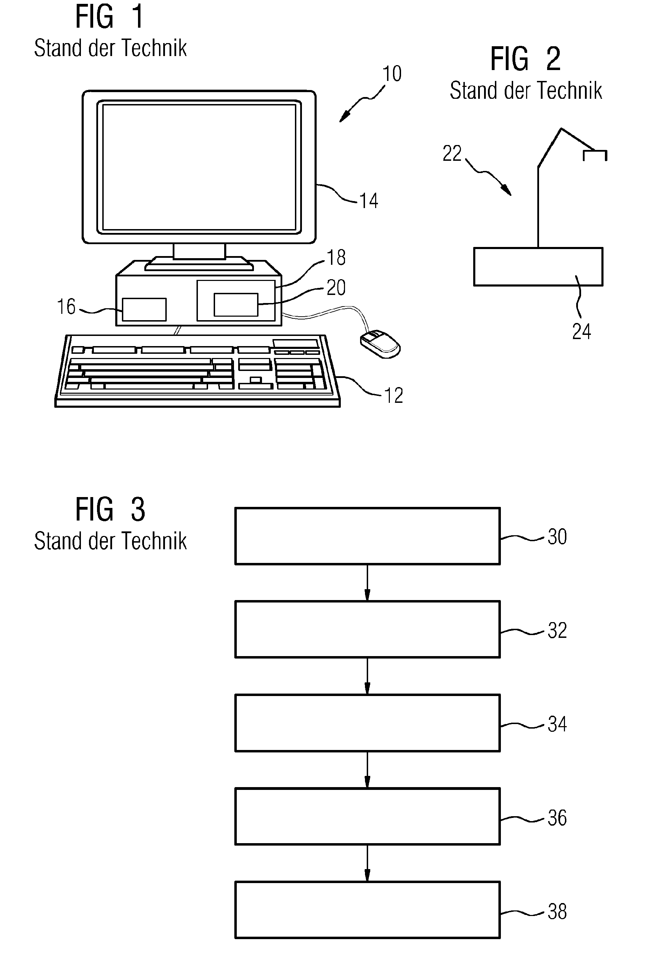

Die Darstellung in FIG 1 zeigt in schematisch vereinfachter Form einen Arbeitsplatzrechner 10, der in an sich bekannter Art und Weise eine Tastatur 12 und eine Anzeigeeinrichtung 14 in Form eines Bildschirms oder dergleichen umfasst. Des Weiteren umfasst der Arbeitsplatzrechner 10 - in ebenfalls an sich bekannter Art und Weise - eine Verarbeitungseinheit 16 in Form eines Mikroprozessors oder dergleichen, einen Speicher 18 und ein in den Speicher 18 geladenes Computerprogramm 20.

Das Computerprogramm 20 umfasst zum Beispiel eine Funktionalität für einen mechanischen Entwurf einer jeweils zu entwickelnden Vorrichtung. Das Computerprogramm 20 oder eine Teilfunktionalität des Computerprogramms 20 ist damit zum Beispiel ein sogenanntes CAD-Programm.

Ein Arbeitsplatzrechner 10 wie in FIG 1 gezeigt kommt auch als Plattform für das hier und im Folgenden beschriebene Verfahren in Betracht. Dann umfasst das in den Speicher 18 des Arbeitsplatzrechners 10 geladene Computerprogramm 20 eine Softwareimplementation dieses Verfahrens. Soweit das im Folgenden beschriebene Verfahren betroffen ist, wird ein Computerprogramm 20 zur Implementierung des Verfahrens als Engineeringsystem 20 bezeichnet.

Die Darstellung in FIG 2 zeigt in schematisch vereinfachter Form einen Industrieroboter als Beispiel für ein mechatronisches System 22. Ein solcher Industrieroboter umfasst mehrere Antriebe zum Bewegen der einzelnen Gelenke. Die einzelnen Gelenke umfassen mechanische Elemente, welche die Dimension der durch die Gelenke verbundenen Segmente und deren mechanische Belastbarkeit bestimmen. Die Antriebe und die mechanischen Elemente legen den Bewegungsbereich des Industrieroboters und der davon umfassten einzelnen Gelenke fest. Zur Bewegung jedes Gelenks ist jeweils ein Antrieb 24 vorgesehen. In der Darstellung in FIG 2 ist insoweit nur eine Basis des Industrieroboters, die den Antrieb 24 für dessen Grundgelenk umfasst, bezeichnet. Ebenso ist zumindest ein Antrieb zum Bewegen des Greifers oder eines anstelle des Greifers von dem Industrieroboter aufgenommenen Werkzeugs vorgesehen (nicht gezeigt). Ein Beispiel für ein solches Werkzeug ist ein Fräswerkzeug. Das Fräswerkzeug wird mit einem eigenen Antrieb (ebenfalls nicht gezeigt) in Rotation versetzt.

Die vorangehende kurze Beschreibung eines an sich bekannten Industrieroboters gilt für jedes mechatronische System 22 in Bezug auf den oder jeden davon umfassten Antrieb 24 und die mechanischen Elemente entsprechend, so dass aufgrund der exemplarischen bildlichen Darstellung eines Industrieroboters keine einschränkende Auslegung erfolgen soll, denn der hier und im Folgenden vorgestellte Ansatz ist für beliebige mechatronische Systeme 22 anwendbar.

Die Darstellung in FIG 3 zeigt - in ebenfalls schematisch vereinfachter Form - einen bisherigen Ablauf beim Entwurf eines im Folgenden auch nur kurz als System 22 bezeichneten mechatronischen Systems 22. Der Ablauf umfasst fünf Projektierungsschritte 30-38, nämlich einen ersten, zweiten, dritten, vierten und fünften Projektierungsschritt 30-38.

Danach erfolgt in einem ersten Projektierungsschritt 30 ein mechanischer Entwurf des jeweiligen Systems 22. Der erste Projektierungsschritt 30 und der dort erfolgende mechanische Entwurf des Systems 22 werden hier und im Folgenden mitunter auch als Konstruktion 30 bezeichnet. Hier erfolgt die Festlegung der mechanischen Eigenschaften des mechatronischen Systems 22, also die Festlegung von Geometriedaten, die Festlegung von Massen, etc.

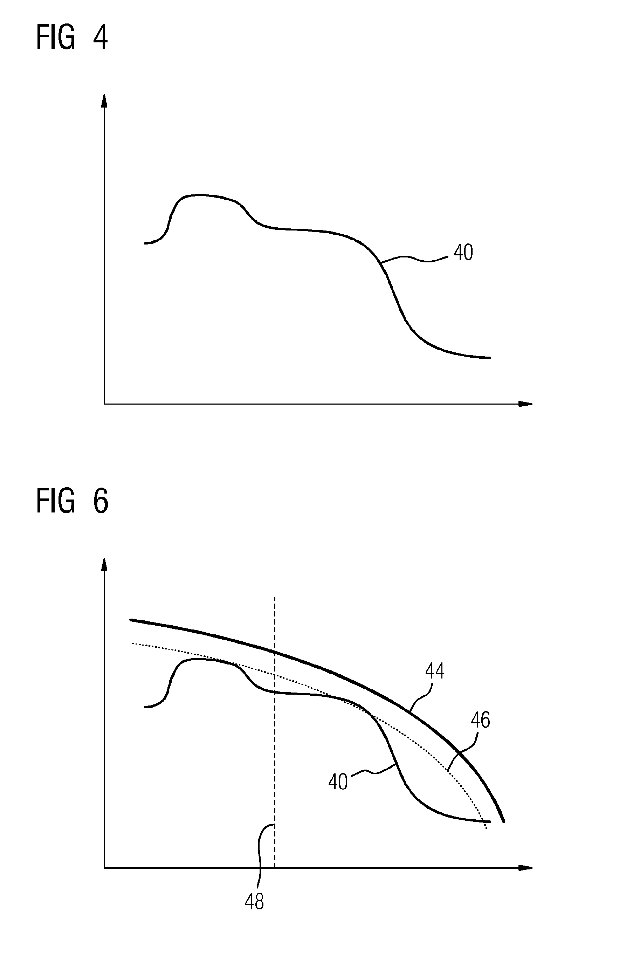

Anschließend erfolgt in einem zweiten Projektierungsschritt 32 eine Dimensionierung zumindest eines Antriebs 24 des Systems 22. Dazu gehört auch, dass für die von dem mechatronischen System 22 zu erfüllende Bewegungsaufgabe ein Lastfall simuliert oder berechnet wird. Dies musste der Entwerfer eines mechatronischen Systems 22 bisher selbst unternehmen, zum Beispiel indem dafür selbst erstellte Hilfsmittel oder von anderer Seite bereitgestellte Softwarewerkzeuge verwendet wurden. Das Ergebnis einer Erzeugung eines solchen Lastfalls ist eine im Folgenden als Lastkurve 40 bezeichnete Lastfallkennlinie für die zu erfüllende Bewegungsaufgabe. Eine exemplarische Darstellung einer Lastkurve 40 ist in FIG 4 gezeigt.

Die Darstellung der Lastkurve 40 in FIG 4 (und die darauf basierende Darstellung in FIG 6) ist ausdrücklich nur ein Beispiel. Generell gilt, dass ein Verwender des Engineeringsystems 20 die Aufgabe des jeweiligen mechatronischen Systems mittels der jeweils gewünschten Bewegung spezifiziert. Er gibt also die Position als Funktion der Zeit vor. Implizit sind darin die Verläufe der zeitlichen Ableitungen enthalten, also Geschwindigkeit über Zeit, Beschleunigung über Zeit, etc. Das Engineeringsystem 20 umfasst ein Rechenmodell (oder hat Zugriff auf ein solches Rechenmodell), mit dem über die bekannten Bewegungsdifferentialgleichungen die so spezifizierte Bewegung mit Kräften in Zusammenhang gesetzt wird. Aus einer gegeben Bewegung als Funktion der Zeit kann also der Verlauf der Antriebskräfte/-momente über der Zeit errechnet werden.

Die Verläufe von Geschwindigkeit (bzw. die auf Motorseite umgerechnete Drehzahl) und Drehmoment können nun (ohne Zeitbezug) als Trajektorie in einer Drehzahl-Drehmoment-Ebene aufgetragen werden. In dieser Ebene leben zugleich die Motorkennlinien, die die grundsätzliche Leistungsfähigkeit eines Motors bzw. Antriebs wiedergeben. Aus unterschiedlichen thermischen und/oder zeitlichen Belastungssituationen resultiert jeweils eine Kennlinie, also zum Beispiel eine Lastkurve 40, wie sie beispielhaft in FIG 4 gezeigt ist.

Die Lastkurve 40 beschreibt gewissermaßen den Leistungsbedarf des Systems 22 unter Berücksichtigung der bewegten Massen, Reibung, Prozesskräfte, usw. Auf Basis der Dimensionierung (erster Projektierungsschritt 30) und der ermittelten Lastkurve 40 (zweiter Projektierungsschritt 32) erfolgt in einem dritten Projektierungsschritt 34 eine Auswahl der Antriebe 24, also eine Auswahl der jeweiligen elektrischen Komponenten (Motor, Umrichter, Einspeisung, etc.). Die Auswahl erfolgt mit der Maßgabe, dass die Vorgaben gemäß der Lastkurve 40 erfüllt werden müssen. Dies lässt sich kurz dahingehend zusammenfassen, dass ein Antrieb 24 oder mehrere Antriebe 24 ausgewählt werden muss bzw. ausgewählt werden müssen, dessen bzw. deren Leistung zumindest den gemäß der Lastkurve 40 ermittelten Leistungsbedarf erfüllt bzw. erfüllen. Für einfache sprachliche Verhältnisse wird im Folgenden nur noch auf einen Antrieb 24 Bezug genommen. Diese Formulierung soll aber stets so ausgelegt werden, dass davon genau ein Antrieb oder mehrere Antriebe umfasst ist oder sind.

Schließlich erfolgt in einem vierten Projektierungsschritt 36 eine Schaltplanerstellung und zum Abschluss in einem fünften Projektierungsschritt 38 die Automatisierung des jeweiligen Systems 22, also die Auswahl einer Steuerungstechnik und eine Programmierung des oder jedes von dem mechatronischen System 22 umfassten Automatisierungssystems.

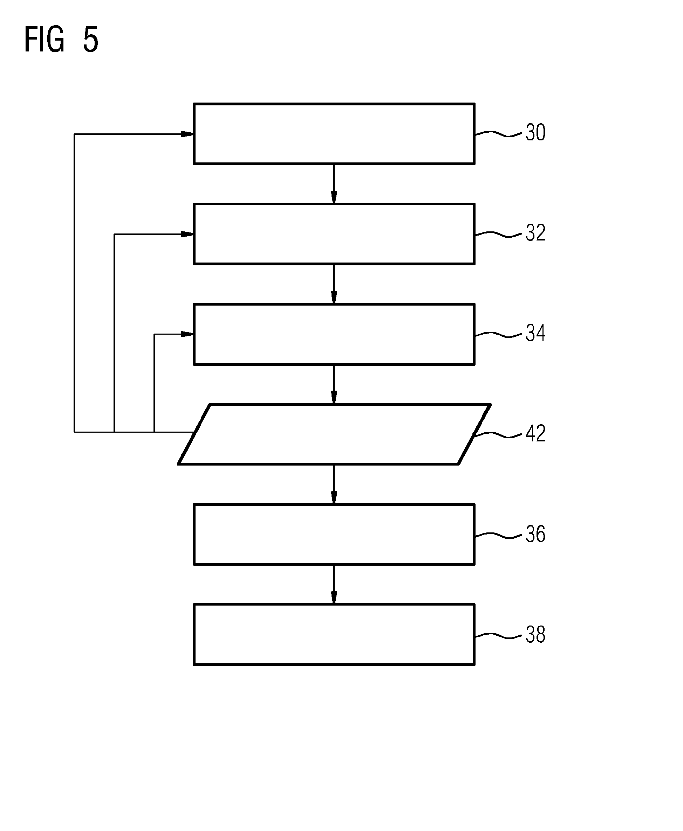

Die Darstellung in FIG 5 zeigt schematisch vereinfacht einen Ablauf eines Verfahrens zum computerunterstützten Entwurf eines mechatronischen Systems 22 entsprechend dem hier vorgestellten Ansatz. Erneut erfolgt in einem ersten Projektierungsschritt 30 die mechanische Konstruktion und dementsprechend eine Festlegung der mechanischen Eigenschaften des Systems 22 mit einer Festlegung insbesondere der jeweiligen Geometrien und der jeweiligen Massen.

In einem zweiten Projektierungsschritt 32 erfolgt - wie bisher - eine Dimensionierung eines Antriebs 24 des Systems 22. Dazu gehört erneut, dass auf Basis einer Simulation/Be¬rechnung eines Lastfalls eine Lastkurve 40 für die zu erfüllende Bewegungsaufgabe und damit ein theoretischer Leistungsbedarf ermittelt wird. Das Engineeringsystem 20 umfasst ein in Software implementiertes und zur automatischen Ermittlung der Lastkurve 40 geeignetes Rechenmodell. Die Grundlagen zur Ermittlung einer solchen Lastkurve 40 sind dem Fachmann an sich bekannt und bedürfen hier keiner näheren Erläuterung. In einem anschließenden dritten Projektierungsschritt 34 erfolgt - ebenfalls wie bisher - eine Konkretisierung des jeweiligen Antriebs 24, also eine Auswahl der jeweiligen Komponenten (Motor, Umrichter, Einspeisung, etc.). Diese Konkretisierung erfolgt auf Basis der Dimensionierung (erster Projektierungsschritt 30) und der ermittelten Lastkurve 40 (zweiter Projektierungsschritt 32) mit der Maßgabe, dass die Vorgaben gemäß der Lastkurve 40 erfüllt werden müssen.

In einem zwischengeschalteten Projektierungsschritt 42 erfolgt eine Bewertung und gegebenenfalls eine Simulation der entsprechend der bisherigen Projektierungsschritte 30-34 erhaltenen Mechanik und Elektrik. Das Engineeringsystem 20 umfasst auch dafür ein in Software implementiertes Rechenmodell.

Die Darstellung in FIG 6 zeigt, wie anhand des ermittelten Leistungsbedarfs des Systems 22, also der Lastkurve 40 des Antriebsstrangs, und einer Kennlinie 44 des projektierten Antriebs 24 ermittelt werden kann, ob der projektierte Antrieb 24 und die Mechanik des Systems 22 zueinander passen. Im dargestellten Fall liegt die Lastkurve 40 vollständig unter der Kennlinie 44. Mithin reicht die Leistung des Antriebs 24 in jedem Punkt aus, um den Leistungsbedarf des Systems 22 zu erfüllen. Antrieb 24 und mechanische Konstruktion passen also zueinander.

Es besteht allerdings die Möglichkeit, dass der ermittelte Leistungsbedarf mit einem kleiner dimensionierten Antrieb 24 (Kennlinie 46) ebenfalls oder zumindest näherungsweise erreicht werden kann. Dann besteht die Möglichkeit zu entscheiden, ob auch das näherungsweise Erreichen des Leistungsbedarfs gemäß der Lastkurve 40 ausreicht oder ob der mechanische Teil des Systems 22 so geändert werden kann, dass sich auch mit einer geringeren Leistung des Antriebs 24 der Leistungsbedarf insgesamt wieder erfüllen lässt. Eine Möglichkeit zur Änderung des mechanischen Teils des Systems besteht zum Beispiel darin, die bewegten Massen kleiner zu dimensionieren, zum Beispiel in Form einer Antriebswelle mit einem reduzierten Durchmesser, so dass die zu beschleunigende Masse reduziert ist.

Eine solche Kennlinie 44, 46 oder ein charakteristischer Punkt auf der Kennlinie 44, 46 ist ein Beispiel für eine Kenngröße des jeweils betrachteten Antriebs 24. Eine solche Kenngröße wird dem Engineeringsystem 20 verfügbar gemacht, zum Beispiel indem eine solche Kennlinie 44, 46 Bestandteil der zu einem im Rahmen des dritten Projektierungsschritts 34 auswählbaren Antrieb 24 gespeicherten Daten ist. Mit dem von dem Engineeringsystem 20 umfassten Rechenmodell kann dann automatisch geprüft werden, ob der mechanische Entwurf und der Antrieb 24 zueinander passen.

Die Prüfung, ob der mechanische Entwurf und der zumindest eine Antrieb 24 zueinander passen, kann - wie in FIG 6 gezeigt - anhand einer für das mechatronische System 22 mittels des Rechenmodells ermittelten Lastkurve 40 erfolgen. Grundsätzlich ist auch denkbar und für einzelne Anwendungsfälle ausreichend, wenn keine Lastkurve 40, sondern ein lastspezifischer Kennwert oder mehrere lastspezifische Kennwerte ermittelt werden. Die Systematik der Prüfung, ob die Konstruktion des Systems 22 und der Antrieb 24 zueinander passen, ist davon nicht betroffen.

Genauso kann auch vorgesehen sein, dass die Lastkurve 40 an einem Arbeitspunkt 48 des jeweiligen Antriebs 24 betrachtet wird. Die Prüfung, ob Antrieb 24 und Konstruktion zueinander passen, bezieht sich dann auf einen stationären Betriebszustand des Systems 22, zum Beispiel wenn ein Fräswerkzeug mit einem an seinem Arbeitspunkt 48 betriebenen Antrieb 24 gedreht wird. Zusätzlich oder alternativ kann auch vorgesehen sein, dass die Lastkurve 40 an mehreren Stützstellen betrachtet wird. Dann kann bei der Prüfung, ob Antrieb 24 und Konstruktion zueinander passen, auch ein dynamisches Verhalten des Systems 22 berücksichtigt werden. Dann ist zum Beispiel erkennbar, ob die Leistung des Antriebs 24 auch beim Anfahren des Systems 22 bis zum Erreichen des Arbeitspunkts 48 des Antriebs 24 ausreicht, um den Leistungsbedarf des Systems 22 zu erfüllen.

Der oben beschriebene Vergleich kann durch einen Verwender des Engineeringsystems 20 erfolgen, indem das Engineeringsystem 20 diesem zum Beispiel eine Darstellung wie in FIG 6 zeigt oder charakteristische Vergleichswerte anzeigt. Die Vergleich, also die Prüfung, ob Antrieb 24 und Konstruktion zueinander passen, kann mittels des Engineeringsystems 20 auch automatisch erfolgen, so dass nur das Vergleichsergebnis angezeigt wird.

Darüber hinaus können mit dem von dem Engineeringsystem 20 umfassten Rechenmodell auch Vorschläge für eine Anpassung der Mechanik an den Antrieb 24 und/oder für eine Anpassung des Antriebs 24 an die Mechanik gemacht werden. Bei einer Anpassung der Leistung des Antriebs 24 greift das Rechenmodell dabei auf eine Datenbasis mit Daten für verfügbare Antriebe 24 zu. Dann kann das Ergebnis einer Verwendung von Antrieben 24 einer anderen Leistungsklasse tabellarisch oder in sonst geeigneter Art und Weise dargestellt werden, so dass ein Verwender des Engineeringsystems 20 eine Auswahlmöglichkeit erhält. Hinsichtlich einer Anpassung der Mechanik des Systems 22 kann ebenfalls auf eine Bauteilbibliothek zurückgegriffen werden, so dass anhand der Bauteilbibliothek zum Beispiel leichtere mechanische Komponenten automatisch ausgewählt und vorgeschlagen werden. Zusätzlich oder alternativ kann auch, speziell bei Bauteilen, die Bestandteil der mechanischen Konstruktion des Systems 22 sind, aber nicht als Standardelemente aus einer Bibliothek ausgewählt wurden, automatisch eine schrittweise Änderung einer Dimension des jeweiligen Bauteils oder mehrerer Bauteile vorgeschlagen und zur Auswahl angeboten werden, zum Beispiel eine schrittweise Reduktion eines Durchmessers einer angetriebenen Welle.

Die in der Darstellung in FIG 5 von dem den zwischengeschalteten Projektierungsschritt 42 symbolisierenden Funktionsblock ausgehenden Pfeile zum ersten, zweiten und dritten Projektierungsschritt 30, 32, 34 verdeutlichen, dass anhand der im zwischengeschalteten Projektierungsschritt 42 erhaltenen Ergebnisse eine erneute Ausführung dieser oder einzelner Projektierungsschritte 30-34 erfolgen kann, um das System 22 insgesamt zu optimieren.

Wenn eine optimale Gesamtkonfiguration des Systems 22 gefunden ist, werden anschließend der vierte und fünfte Projektierungsschritt, so wie dies oben bereits anhand der Darstellung in FIG 3 erläutert wurde, ausgeführt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Die Vorteile des hier vorgeschlagenen Ansatzes bestehen vor allem darin, dass der Entwurf des mechatronischen Systems 22 ohne ein Hin- und Herspringen zwischen verschiedenen Funktionalitäten des Engineeringsystem 20 oder verschiedenen zu einem Engineeringsystem 20 zusammengefassten Softwarewerkzeugen (CAD bzw. eCAD) möglich ist. Auf diese Weise können parallel verschiedene Systemeigenschaften manipuliert und optimiert werden. Auf Seiten der Mechanik sind dies vor allem Geometrie, Massen, Reibwerte, etc. Auf der Antriebsseite sind dies alle Systemeigenschaften des jeweiligen Antriebsstrangs, also insbesondere Motor, Umrichter, Einspeisung und mithin die Antriebskennlinie, etc. Auf diese Weise gelingt der Zugang zu verschiedensten Optimierungszielen. In einem als integrierte Entwicklungs- und Simulationsumgebung fungierenden Engineeringsystem 20 können Abhängigkeiten zwischen einzelnen Entwurfsfreiheitsgraden direkt aufgezeigt werden. Eine kleine Änderung in dem geforderten Lastspiel des mechatronischen Systems 22 kann sich zum Beispiel signifikant in Bezug auf die benötigten elektrischen Komponenten auswirken, so dass eine nächstkleinere Baugröße verwendbar wird. Dies bedeutet einen Vorteil hinsichtlich der Kosten, der benötigten Anschlussleistung und des Platzbedarfs im Schaltschrank. Das Besondere ist, dass als Ergebnis des hier vorgeschlagenen Entwurfs des mechatronischen Systems 22 eine gesamtoptimierte Lösung entsteht, die zum Beispiel das Optimum in punkto Kosten, Energieeffizienz, Baugröße, Schaltschrankdesign, etc. darstellt. Eine solche optimierte Lösung erfordert nach der konventionellen Vorgehensweise derzeit einen mehrfachen Durchlauf der Prozesskette mit den beschriebenen Projektierungsschritten 30-38 (FIG 3). Zudem kann das Ergebnis des Entwurfs des mechatronischen Systems 22 frühzeitig und während des Entwurfs zu nahezu jedem Entwurfszeitpunkt abgesichert werden. Insgesamt ergeben sich damit eine verkürzte Entwicklungsdauer und eine frühzeitige Optimierungsmöglichkeit. Die durchgängige Verfügbarkeit der Daten ermöglicht darüber hinaus auch eine Bewegungssimulation des mechanischen Konstruktionsergebnisses mit den Spezifika des Antriebsstrangs. Außerdem können die Daten auch zur Evaluierung des Dynamikverhaltens und der Verifikation der Mechatronik, zum Berechnen von Bewegungsvorgängen und zur Simulation des mechatronischen Systems 22 mit starren oder flexiblen Körpern verwendet werden.

## Patentansprüche

1. Verfahren zum computerunterstützten Entwurf eines mechatronischen Systems (22),
- wobei mit einem Engineeringsystem (20) ein mechanischer Entwurf des Systems (22) erstellt wird,
- wobei dem Engineeringsystem (20) auch Eigenschaften zumindest eines von dem mechatronischen System (22) umfassten Antriebs (24) verfügbar gemacht werden und
- wobei der mechanische Entwurf automatisch an die Eigenschaften des zumindest einen Antriebs (24) und/oder die Eigenschaften des zumindest einen Antriebs (24) automatisch an den mechanischen Entwurf angepasst werden.

2. Verfahren nach Anspruch 1, wobei der mechanische Entwurf an die Eigenschaften des zumindest einen Antriebs (24) und/oder die Eigenschaften des zumindest einen Antriebs (24) an den mechanischen Entwurf angepasst werden, indem mit einem in dem Engineeringsystem (20) implementierten Rechenmodell automatisch Vorschläge für eine Anpassung der Mechanik an den zumindest einen Antrieb (24) und/oder für eine Anpassung des zumindest einen Antriebs (24) an die Mechanik gemacht werden.

3. Verfahren nach Anspruch 1 oder 2, wobei als Eigenschaft des zumindest einen Antriebs (24) dem Engineeringsystem (20) eine Kenngröße des Antriebs (24), insbesondere eine Kennlinie (44, 46), verfügbar gemacht wird und wobei mit dem Rechenmodell automatisch geprüft wird, ob der mechanische Entwurf und der zumindest eine Antrieb (24) zueinander passen.

4. Verfahren nach Anspruch 3, wobei die Prüfung, ob der mechanische Entwurf und der zumindest eine Antrieb (24) zueinander passen, anhand einer für das mechatronische System (22) mittels des Rechenmodells ermittelten Lastkurve (40) erfolgt.

5. Verfahren nach Anspruch 4, wobei die Lastkurve (40) an einem Arbeitspunkt des jeweiligen Antriebs (24) betrachtet wird.

6. Verfahren nach Anspruch 4, wobei die Lastkurve (40) an mehreren Stützstellen betrachtet wird.

7. Computerprogramm (20) mit Programmcodemitteln, um alle Schritte von jedem beliebigen der Ansprüche 1 bis 6 durchzuführen, wenn das Computerprogramm (20) auf einem Arbeitsplatzrechner (10) zum computerunterstützten Entwurf eines mechatronischen Systems (22) ausgeführt wird.

8. Arbeitsplatzrechner (10) mit einer Verarbeitungseinheit (16) und einem Speicher (18), wobei in den Speicher (18) ein Computerprogramm (20) nach Anspruch 6 geladen ist, das im Betrieb des Arbeitsplatzrechners (10) durch dessen Verarbeitungseinheit (16) ausgeführt wird.
